# EUROPÄISCHE PATENTSCHRIFT

(11) **EP 4 185 411 B1**
(45) Veröffentlichungstag und Bekanntmachung des Hinweises auf die Patenterteilung: **11.12.2024**
(21) Anmeldenummer: 21754946.8
(22) Anmeldetag: 28.07.2021
(51) Int. Cl.: B05C 5/02, B05B 1/30, B23P 15/00, F16K 1/42

(54) **VERFAHREN ZUM ZUSAMMENBAU EINES NADELVENTILS**
METHOD FOR ASSEMBLING A NEEDLE VALVE
PROCÉDÉ D'ASSEMBLAGE D'UNE SOUPAPE À POINTEAU

(30) Priorität: 15.09.2020 DE 102020123966
(43) Veröffentlichungstag der Anmeldung: 31.05.2023
(73) Patentinhaber: Atlas Copco IAS GmbH, 75015 Bretten (DE)
(72) Erfinder: MITTAG, Sten, 76137 Karlsruhe (DE); SAUER, Bernhard, 75248 Ölbronn-Dürrn (DE)
(74) Vertreter: Patentanwälte Bregenzer und Reule Partnerschaftsgesellschaft mbB
(86) Internationale Anmeldenummer: PCT/EP2021/071124
(87) Internationale Veröffentlichungsnummer: WO 2022/058077

(56) Entgegenhaltungen:
- DE-T2- 69 126 667
- US-A- 5 618 566
- US-A1- 2009 107 398
- US-A1- 2019 337 008

## Beschreibung

Die Erfindung betrifft ein Verfahren zum Zusammenbau eines Nadelventils gemäß Oberbegriff des Anspruchs 1.

Nadelventile mit einer oder mehreren Ventilnadeln und einer entsprechenden Anzahl an Ventilsitzen werden beispielsweise dazu verwendet, Fluide, wie beispielsweise Klebstoffe, Dichtstoffe, Dämmstoffe oder andere viskose Materialien mit hoher Präzision in Form von Materialraupen oder Materialpunkten auf Werkstücke aufzutragen. Dabei werden zunehmend dünnere Ventilnadeln verwendet, die entsprechend kleine Auslassöffnungen am jeweils zugeordneten Ventilsitz verschließen. Die Verwendung solcher Ventilnadeln mit geringen Durchmessern und entsprechend kleiner Ventilsitze stellt hohe Anforderungen an die Präzision beim Zusammenbau der Nadelventile. Insbesondere ist es schwierig, den betreffenden Ventilsitz bezüglich der zugeordneten Ventilnadel so zu positionieren und zu fixieren, dass die Ventilnadel exakt so auf ihm aufsitzen kann, dass eine gute Dichtleistung gewährleistet ist.

Ein Verfahren der eingangs genannten Art ist der Anmelderin aus ihrer betrieblichen Praxis bekannt. Aus der DE 19 621 835 A1, der DE 691 26 667 T2, der US 2009/0107398 A1, der US 5 618 566 A und der US 2019/0337008 A1 sind verschiedene Nadelventile bekannt.

Es ist daher Aufgabe der Erfindung, ein Verfahren für den Zusammenbau eines Nadelventils bereitzustellen, das eine bessere Positionierung des Ventilsitzes oder der Ventilsitze bezüglich der Ventilnadel(n) ermöglicht.

Diese Aufgabe wird erfindungsgemäß durch ein Verfahren mit den Merkmalen des Anspruchs 1 gelöst. Vorteilhafte Weiterbildungen der Erfindung sind Gegenstand der abhängigen Ansprüche.

Der Erfindung liegt die experimentell von der Anmelderin gefundene Erkenntnis zugrunde, dass eine Selbstzentrierung eines Ventilsitzes bezüglich der ihm zugeordneten Ventilnadel erfolgen kann, wenn die Ventilnadel während des Fixierens einer den Ventilsitz tragenden Ventilsitzplatte am Gehäuse, in dem die Ventilnadel längsverschieblich geführt ist, eine oszillierende Bewegung durchführt, die der Bewegung entspricht, die sie im Betrieb ausführt, wenn sie in regelmäßigen Abständen immer wieder vom Ventilsitz abgehoben und auf diesen aufgesetzt wird. In einem ersten Schritt wird die Ventilsitzplatte mittels Befestigungsmitteln am Gehäuse befestigt. Entgegen der üblichen Vorgehensweise wird die Ventilsitzplatte im ersten Schritt aber nicht am Gehäuse fixiert, sondern nur soweit befestigt, dass sie bezüglich des Gehäuses noch begrenzt beweglich ist. Dann wird in einem zweiten Schritt jede Ventilnadel in die oszillierende Bewegung versetzt, und in einem dritten Schritt wird die Ventilsitzplatte am Gehäuse fixiert, während sich die Ventilnadel(n) hin und her bewegt bzw. bewegen.

Es wird bevorzugt, dass die mindestens eine Ventilnadel mit einer Frequenz von 10 Hz bis 100 Hz, vorzugsweise von 30 Hz bis 70 Hz und weiter vorzugsweise von 45 Hz bis 55 Hz hin und her bewegt wird, da sich Frequenzen um die 50 Hz als am effektivsten erwiesen haben. Zweckmäßig ist die Ventilsitzplatte nach dem ersten Schritt bezüglich des Gehäuses in der ersten Raumrichtung fixiert, während sie in den beiden weiteren Raumrichtungen begrenzt beweglich ist. Sie kann dann zur Seite hin ausweichen, um jeden Ventilsitz bezüglich der zugehörigen Ventilnadel zentrieren zu können. Zweckmäßig sind die Befestigungsmittel durch die Ventilsitzplatte durchgeführte Schrauben, welche im ersten Schritt bis zum Erreichen eines ersten Drehmoments und im dritten Schritt bis zum Erreichen eines größeren zweiten Drehmoments in das Gehäuse eingedreht werden.

Als Material für jede Ventilnadel und jeden Ventilsitz wird Hartmetall bevorzugt. Hartmetall ist gegenüber den Materialien, zu deren Auftrag das Nadelventil regelmäßig verwendet wird, chemisch resistent. Unter einem Hartmetall ist ein Metallmatrix-Verbundwerkstoff zu verstehen, bei dem in Partikelform vorliegende Hartstoffe durch eine Matrix aus Metall zusammengehalten werden. Als Hartstoffe kommen insbesondere Metallcarbide oder Metallnitride, wie beispielsweise Wolframcarbid, Titancarbid, Titannitrid, Niobcarbid, Tantalcarbid oder Vanadiumcarbid zum Einsatz. Es wird dann zudem bevorzugt, dass die Ventilsitzplatte eine Grundplatte aus Metall, vorzugsweise aus Edelstahl, aufweist, die den mindestens einen Ventilsitz trägt. Insbesondere können alle Ventilsitze einstückig zu einem Bauteil aus Hartmetall zusammengefasst sein, das in der Grundplatte aufgenommen ist, die wiederum am Gehäuse befestigt wird. Insbesondere Edelstahl weist eine hohe Elastizität auf, die bei der Fixierung am Gehäuse im dritten Schritt vorteilhaft ist, während Hartmetall spröder ist. Werden zur Fixierung am Gehäuse Schrauben verwendet, so werden diese vorteilhaft durch die Grundplatte durchgeführt.

Das Nadelventil kann mit nur einer Ventilnadel und einem Ventilsitz ausgestattet sein. Es wird jedoch bevorzugt, dass es mehrere, sich parallel zueinander in der ersten Raumrichtung erstreckende Ventilnadeln aufweist, welche vorzugsweise in einer Reihe angeordnet sind in dem Sinne, dass durch alle Ventilnadeln eine sich senkrecht zur ersten Raumrichtung erstreckende Gerade gelegt werden kann.

Im Folgenden wird die Erfindung anhand eines in der Zeichnung schematisch dargestellten Ausführungsbeispiels näher erläutert. Es zeigen
- Fig. 1: eine schematische Schnittdarstellung eines Nadelventils und
- Fig. 2: eine Explosionsdarstellung des Nadelventils gemäß Fig. 1.

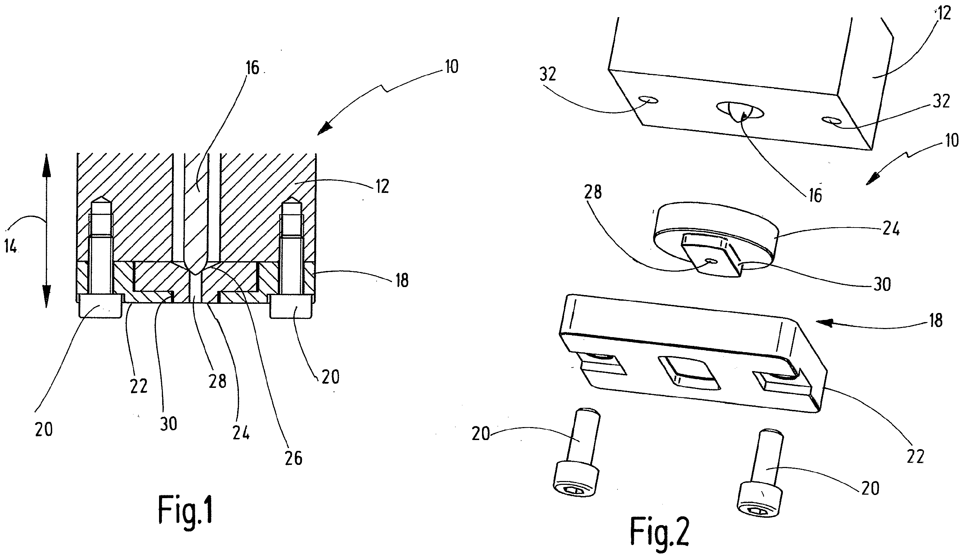

In Fig. 1 ist schematisch ein Nadelventil 10 im Schnitt dargestellt, welches ein Gehäuse 12 und eine im Gehäuse 12 in einer ersten Raumrichtung 14 längsverschieblich geführte Ventilnadel 16 aus Hartmetall aufweist. Am Gehäuse 12 ist eine Ventilsitzplatte 18 mittels Befestigungsmitteln 20 fixiert, welche im hier gezeigten Ausführungsbeispiel Schrauben 20 sind. Die Ventilsitzplatte 18 weist eine Grundplatte 22 aus Edelstahl sowie einen Ventilsitzblock 24 mit einem der Ventilnadel 16 zugeordneten Ventilsitz 26 auf, an dem eine Auslassöffnung 28 für ein mittels des Nadelventils 10 auftragbaren Fluids durch Hin- und Herbewegen der Ventilnadel 16 sowie dadurch bedingtes Abheben vom und Aufsetzen auf den Ventilsitz 26 verschließbar und freigebbar ist. Der Ventilsitzblock 24 ist in der Grundplatte 22 aufgenommen und weist einen Absatz 30 auf, so dass er nur von der dem Gehäuse 12 zugewandten Seite in die Grundplatte 22 eingesetzt werden kann. Er ist einstückig aus demselben Hartmetall gefertigt wie die Ventilnadel 16.

Beim Zusammenbau des Nadelventils 10 aus den in Fig. 2 gezeigten Einzelteilen wird zunächst der Ventilsitzblock 24 in die Grundplatte 22 eingesetzt und bildet mit ihr die Ventilsitzplatte 18. Diese wird von unten an das Gehäuse 12 angelegt, und die Schrauben 20 werden durch die Grundplatte 22 durchgesteckt und in mit Gewinde versehenen Schraubenlöchern 32 im Gehäuse eingedreht, bis sie mit einem ersten vorbestimmten Drehmoment beaufschlagt werden. Die Ventilsitzplatte 18 liegt dann in der ersten Raumrichtung 14 nahezu unbeweglich am Gehäuse 12 an, hat aber in den beiden anderen, zur ersten Raumrichtung 14 und zueinander senkrecht stehenden Raumrichtungen noch etwas Spiel. Die Ventilnadel 16 wird dann in eine oszillierende Bewegung versetzt, die einem aufeinanderfolgenden Öffnen und Schließen des Nadelventils 10 mit einer Frequenz von ca. 50 Hz gleichkommt. Während dieser oszillierenden Bewegung der Ventilnadel 16 werden die Schrauben 20 fest angezogen bis zu einer Beaufschlagung mit einem vorbestimmten zweiten Drehmoment, das größer ist als das erste Drehmoment. Während des Anziehens der Schrauben 20 bewirkt das ständige Abheben der Ventilnadel 16 vom Ventilsitz 26 und das darauffolgende Aufsetzen eine Selbstzentrierung des Ventilsitzes 26 bezüglich der Ventilnadel 16, so dass der Ventilsitz 26 bezüglich der Ventilnadel 16 sehr genau positioniert werden kann.

Im gezeigten Ausführungsbeispiel weist das Nadelventil 10 nur eine Ventilnadel 16 und den zugehörigen Ventilsitz 26 auf. Es versteht sich von selbst, dass das erfindungsgemäße Verfahren auch auf Nadelventile angewandt werden kann, die mehrere Ventilnadeln aufweisen sowie zu jeder Ventilnadel einen Ventilsitz. Dabei weist der Ventilsitzblock beispielsweise mehrere in einer Reihe angeordnete Ventilsitze auf, während die Bauweise des Nadelventils im wesentlichen dieselbe ist wie in der Zeichnung gezeigt.

Zusammenfassend ist folgendes festzuhalten: Die Erfindung betrifft ein Verfahren zum Zusammenbau eines Nadelventils 10, welches ein Gehäuse 12, mindestens eine im Gehäuse 12 in einer ersten Raumrichtung 14 längsverschieblich geführte Ventilnadel 16 und eine Ventilsitzplatte 18 aufweist, wobei die Ventilsitzplatte 18 zu jeder Ventilnadel 16 einen dieser zugeordneten Ventilsitz 26 aufweist, an welchem eine Auslassöffung 28 für ein Fluid durch eine Hin- und Herbewegung der betreffenden Ventilnadel 16 verschließbar und freigebbar ist. Erfindungsgemäß ist vorgesehen, dass die Ventilsitzplatte 18 in einem ersten Schritt mittels Befestigungsmitteln 20 am Gehäuse 12 befestigt wird, so dass sie bezüglich des Gehäuses 12 begrenzt beweglich ist, dass in einem zweiten Schritt jede Ventilnadel 16 in eine Hin- und Herbewegung versetzt wird, bei der sie abwechselnd auf den ihr zugeordneten Ventilsitz 26 aufgesetzt und von ihm abgehoben wird und dass die Ventilsitzplatte 18 in einem dritten Schritt am Gehäuse 12 fixiert wird, während sich die mindestens eine Ventilnadel 16 hin und her bewegt.

## Patentansprüche

1. Verfahren zum Zusammenbau eines Nadelventils (10), welches ein Gehäuse (12), mindestens eine im Gehäuse (12) in einer ersten Raumrichtung (14) längsverschieblich geführte Ventilnadel (16) und eine Ventilsitzplatte (18) aufweist, wobei die Ventilsitzplatte (18) zu jeder Ventilnadel (16) einen dieser zugeordneten Ventilsitz (26) aufweist, an welchem eine Auslassöffung (28) für ein Fluid durch eine Hin- und Herbewegung der betreffenden Ventilnadel (16) verschließbar und freigebbar ist, wobei die Ventilsitzplatte (18) in einem ersten Schritt mittels Befestigungsmitteln (20) am Gehäuse (12) befestigt wird, so dass sie bezüglich des Gehäuses (12) begrenzt beweglich ist, **dadurch gekennzeichnet, dass** in einem zweiten Schritt jede Ventilnadel (16) in eine Hin- und Herbewegung versetzt wird, bei der sie abwechselnd auf den ihr zugeordneten Ventilsitz (26) aufgesetzt und von ihm abgehoben wird und dass die Ventilsitzplatte (18) in einem dritten Schritt am Gehäuse (12) fixiert wird, während sich die mindestens eine Ventilnadel (16) hin und her bewegt.

2. Verfahren nach Anspruch 1, **dadurch gekennzeichnet, dass** die mindestens eine Ventilnadel (16) mit einer Frequenz von 10 Hz bis 100 Hz, vorzugsweise von 30 Hz bis 70 Hz und weiter vorzugsweise von 45 Hz bis 55 Hz hin und her bewegt wird.

3. Verfahren nach Anspruch 1 oder 2, **dadurch gekennzeichnet, dass** die Ventilsitzplatte (18) nach dem ersten Schritt bezüglich des Gehäuses (12) in der ersten Raumrichtung (14) fixiert und in den beiden weiteren Raumrichtungen begrenzt beweglich ist.

4. Verfahren nach einem der vorangehenden Ansprüche, **dadurch gekennzeichnet, dass** die Befestigungsmittel (20) durch die Ventilsitzplatte (18) durchgeführte Schrauben sind, welche im ersten Schritt bis zum Erreichen eines ersten Drehmoments und im dritten Schritt bis zum Erreichen eines größeren zweiten Drehmoments in das Gehäuse (12) eingedreht werden.

5. Verfahren nach einem der vorangehenden Ansprüche, **dadurch gekennzeichnet, dass** jede Ventilnadel (16) und jeder Ventilsitz (26) aus Hartmetall gefertigt sind.

6. Verfahren nach Anspruch 5, **dadurch gekennzeichnet, dass** die Ventilsitzplatte (18) eine Grundplatte (22) aus Metall, vorzugsweise aus Edelstahl, aufweist, die den mindestens einen Ventilsitz (26) trägt.

7. Verfahren nach einem der vorangehenden Ansprüche, **dadurch gekennzeichnet, dass** das Nadelventil (10) mehrere, sich parallel zueinander in der ersten Raumrichtung erstreckende Ventilnadeln (16) aufweist.

8. Verfahren nach Anspruch 7, **dadurch gekennzeichnet, dass** die Ventilnadeln (16) in einer Reihe angeordnet sind.

## Claims

1. Method for assembly of a needle valve (10), which has a housing (12), at least one valve needle (16) that is guided in the housing (12) to be longitudinally displaceable in a first spatial direction (14), and a valve seat plate (18), wherein the valve seat plate (18) has a valve seat (26) for each valve needle (16), assigned to the latter, on which seat an outlet opening (28) for a fluid can be closed and opened by means of a back and forth movement of the valve needle (16), wherein in a first step, the valve seat plate (18) is fastened to the housing (12) by means of fastening means (20), so that it has limited mobility with reference to the housing (12), **characterized in that** in a second step, each valve needle (16) is put into a back and forth motion, during which it is alternately set onto the valve seat (26) assigned to it and lifted up from it, and that in a third step, the valve seat plate (18) is fixed in place on the housing (12) while the at least one valve needle (16) moves back and forth.

2. Method according to claim 1, **characterized in that** the at least one valve needle (16) is moved back and forth at a frequency of 10 Hz to 100 Hz, preferably of 30 Hz to 70 Hz, and further preferably of 45 Hz to 55 Hz.

3. Method according to claim 1 or 2, **characterized in that** after the first step, the valve seat plate (18) is fixed in place in the first spatial direction (14) with reference to the housing (12), and has limited mobility in the two other spatial directions.

4. Method according to one of the preceding claims, **characterized in that** the fastening means (20) are screws that are passed through the valve seat plate (18), which are screwed into the housing (12) until a first torque is reached during the first step, and until a greater second torque is reached during the third step.

5. Method according to one of the preceding claims, **characterized in that** each valve needle (16) and each valve seat (26) are produced from hard metal.

6. Method according to claim 5, **characterized in that** the valve seat plate (18) comprises a base plate (22) composed of metal, preferably of stainless steel, which carries the at least one valve seat (26).

7. Method according to one of the preceding claims, **characterized in that** the needle valve (10) has multiple valve needles (16) that extend parallel to one another in the first spatial direction.

8. Method according to claim 7, **characterized in that** the valve needles (16) are arranged in a row.

## Revendications

1. Procédé d'assemblage d'une soupape à pointeau (10) qui comporte un boîtier (12), au moins un pointeau de soupape (16) guidé de manière mobile longitudinalement dans une première direction spatiale (14) dans le boîtier (12) et une plaque de sièges de soupape (18), la plaque de sièges de soupape (18) comportant pour chaque pointeau de soupape (16) un siège de soupape (26) associé à celui-ci et sur lequel une ouverture de sortie (28) destinée à un fluide peut être fermée et libérée par un mouvement alternatif du pointeau de soupape (16) concerné, la plaque de sièges de soupape (18) étant dans une première étape fixée au boîtier (12) à l'aide de moyens de fixation (20) de sorte qu'elle puisse être déplacée de manière limitée par rapport au boîtier (12), **caractérisé en ce que**, dans une deuxième étape, chaque pointeau de soupape (16) est soumis à un mouvement alternatif dans lequel il est alternativement posé sur le siège de soupape (26) et soulevé de celui-ci, et **en ce que** la plaque de sièges de soupape (18) est fixée au boîtier (20) dans une troisième étape pendant que l'au moins un pointeau de soupape (16) se déplace suivant un mouvement alternatif.

2. Procédé selon la revendication 1, **caractérisé en ce que** l'au moins un pointeau de soupape (16) est déplacé suivant un mouvement alternatif à une fréquence de 10 Hz à 100 Hz, de préférence de 30 Hz à 70 Hz et plus préférablement de 45 Hz à 55 Hz.

3. Procédé selon la revendication 1 ou 2, **caractérisé en ce que**, après la première étape, la plaque de sièges de soupape (18) est fixée dans la première direction spatiale (14) par rapport au boîtier (12) et est mobile de manière limitée dans les deux autres directions spatiales.

4. Procédé selon l'une des revendications précédentes, **caractérisé en ce que** les moyens de fixation (20) sont des vis qui sont passées à travers la plaque de sièges de soupape (18) et qui sont vissées dans le boîtier (12) dans la première étape jusqu'à ce qu'un premier couple soit atteint et dans la troisième étape jusqu'à ce qu'un deuxième couple plus élevé soit atteint.

5. Procédé selon l'une des revendications précédentes, **caractérisé en ce que** chaque pointeau de soupape (16) et chaque siège de soupape (26) sont fabriqués en métal dur.

6. Procédé selon la revendication 5, **caractérisé en ce que** la plaque de sièges de soupape (18) comporte une plaque de base (22) en métal, de préférence en acier spécial, qui porte l'au moins un siège de soupape (26).

7. Procédé selon l'une des revendications précédentes, **caractérisé en ce que** la soupape à pointeau (10) comporte une pluralité de pointeaux (16) qui s'étendent parallèlement les uns aux autres dans la première direction spatiale.

8. Procédé selon la revendication 7, **caractérisé en ce que** les pointeaux de soupape (16) sont disposés suivant une rangée.
